## Europäisches Patentamt

## European Patent Office

## Office européen des brevets

(19)

(11) Veröffentlichungsnummer: **0 186 067**
**B1**

(12) # EUROPÄISCHE PATENTSCHRIFT

(45) Veröffentlichungstag der Patentschrift:
**25.10.89**

(21) Anmeldenummer: **85115911.1**

(22) Anmeldetag: **13.12.85**

(51) Int. Cl.⁴: **B 23 B 27/10,** B 23 B 27/10,
B 23 B 27/16, B 23 C 5/00,
B 23 C 5/22, B 23 C 5/28

(54) **Werkzeug für spanabhebendes Bearbeiten.**

(30) Priorität: **14.12.84 CS 9796/84**
**22.02.85 CS 1307/85**
**13.05.85 CS 3388/85**

(43) Veröffentlichungstag der Anmeldung:
**02.07.86 Patentblatt 86/27**

(45) Bekanntmachung des Hinweises auf die Patenterteilung:
**25.10.89 Patentblatt 89/43**

(84) Benannte Vertragsstaaten:
**AT CH DE FR GB LI SE**

(56) Entgegenhaltungen:
**DE-A-3 105 933**
**DE-C-828 034**
**FR-A-2 542 230**

**METALWORKING PRODUCTION, Nr. 17, Juli 1971,
Seite 95, London, GB; "Vaporisation cools cutting
tools"**
**AMERICAN MACHINIST, 2. April 1951, Seite 66,
London, GB; "Internal-cooled bits"**

(73) Patentinhaber: **Továrny strojirenské techniky,
koncern, Trida Politickych veznu 11, CS- 113 42
Prag 1 (CS)**

(72) Erfinder: **Rasa, Jaroslav, CSC, Dipl.- Ing., Pod
Stráni 2165, Prag 10 (CS)**

(74) Vertreter: **Eitle, Werner, Dipl.- Ing., Hoffmann,
Eitle & Partner Patentanwälte Arabellastrasse 4,
D-8000 München 81 (DE)**

EP 0 186 067 B1

## Beschreibung

Die Erfindung betrifft ein Werkzeug für spanabhebendes Bearbeiten gemäß Oberbegriff von Patentanspruch 1. Vor allem können gemäß vorliegender Erfindung Werkzeuge für Drehen und Fräsen ausgeführt werden. Ein gemeinsames Kennzeichen derartiger Werkzeuge ist die Anwendung wenigstens einer auswechselbaren Schneidplatte.

Derzeit bekannte Werkzeuge für spanabhebendes Bearbeiten unterscheiden sich durch ihre Form, Abmessungen, Material und den möglichen Anwendungscharakter. Die Mehrzahl dieser Werkzeuge besteht aus einem einzigen Materialstück. Lediglich manche Fräser sind aus zwei oder mehr Stücken zusammengesetzt, was jedoch aus deren Konstruktionsprinzip, Zweck und Anwendungsart folgt. Es sind ferner Werkzeuge insbesondere für Drehen bekannt, welche in einem vollen Körper Durchgangsöffnungen für den Durchfluss einer Kühlflüssigkeit an die Schneidplatte besitzen. Diese Durchgangsöffnungen sind Einwegkanäle. Die Schneidplatte wird in diesen, sowie auch in den Fällen, in denen die Kühlflüssigkeit außerhalb des Werkzeuges zugeführt wird, an der äußeren Oberfläche gekühlt. Es sind auch Anordnungen bekannt, bei denen die Schneidplatte mit einem Hohlraum mit einer Dauerfüllung eines Kühlmediums versehen ist.

Es sind desweiteren Ausbohrwerkzeuge mit Dämmpfungsanordnungen verschiedener Ausführung bekannt, die im Körper des Werkzeuges eingebaut sind. Derartige Anordnungen beruhen zum Beispiel auf kleineren Körpern verschiedener Form, die schwimmend in einem Hohlraum des Werkzeuges eingeschlossen sind, oder bei anderen Ausführungen auf Scheiben in diesem Hohlraum, die gegeneinander durch eine Feder gedrückt werden. Diese und ähnliche Anordnungen haben den Zweck, Vibrationen des Werkzeuges zu dämpfen. Es wird auch das sogenannte Ejektorprinzip angewendet, bei dem außerhalb des Werkzeugmantels oder zwischen einem Doppelmantel der Ausbohrstange ein Kühlmedium zur Krone zugeführt wird und über eine Öffnung in der Werkzeugachse und der Ausbohrstange zusammen mit den Spänen vom Bearbeiten außerhalb des Werkzeuges abgeführt wird.

Ein gemeinsamer Nachteil derzeit angewendeter Werkzeuge, vor allem von Werkzeugen mit auswechselbaren Schneidplatten, ist deren geringe Kompaktheit. Das betrifft einerseits das Werkzeug selbst und dessen Verbindung mit der Werkzeugmaschine, andererseits Gruppen bestehend aus einer Schneidplatte und dem Werkzeug. Es werden dabei die Eigenschaften des zum Bilden des Werkzeuges und der Schneidplatte angewendeten Materials nicht voll ausgenützt. Mit Rücksicht auf die unterschiedliche Lebensdauer einzelner Bestandteile der Werkzeugmaschine wird eine relativ niedrige Schneidleistung und Lebensdauer erzielt. Der schwächste Bestandteil ist derzeit die Schneidplatte. Dieses Problem wurde bisher nicht voll befriedigend gelöst, wie zum Beispiel durch selbsttätiges Auswechseln von Werkzeugen, durch Anwendung verschiedener Prinzipien der adaptiven Kontrolle des Bearbeitungsvorganges, welche zusätzlich zu der niedrigeren Verläßlichkeit noch die Menge an erforderlichem Material, den Preis und die Kompliziertheit erhöhen. Es wird ferner ein Verfahren eines selbsttätigen Auswechselns der werkzeugeigenen Platte oder nur deren aktive Teile aus einem, am Werkzeug befestigten Vorratsbehälter geprüft, wo die bisher erzielten Vorteile augenscheinlich nicht die Nachteile überwiegen. Ein Versehen des Werkzeuges mit den erwähnten Elementen erhöht dann nur die Kompliziertheit des Werkzeuges.

Aus der Zeitschrift "Metalworking Production", Nr. 17, Juli 1971, Seite 95, ist als nächstkommender Stand der Technik ein Werkzeug mit Schneidplatte zum spanabhebenden Bearbeiten bekannt, dessen Schaft einen Hohlraum aufweist. In diesem Hohlraum wird durch kapillare Wirkung Kühlmittel an den Hohlraumwänden vom Schaftende her eingebracht. Der entstehende Dampf wird am gleichen Schaftende wieder ausgeführt. Dieses bekannte Werkzeug weist die Nachteile der bereits vorerwähnten Werkzeuge auf, insbes. eine zum Teil nicht ausreichende Kühlung an der Schneidplatte. und eine unzureichende Vibrationsdämpfung.

Zudem ist aus der Zeitschrift "American Mashinist", 2 April 1951, Seite 66, ein spanabhebendes Werkzeug mit Schneidplatte bekannt, in welchem zur Kühlung der Werkzeugspitze, insbesondere der Schneidplatte, kühlmittelführende Längs-Kanäle vorgesehen sind. Die Kühlung erfolgt jedoch nur entlang der Kühlmittel führenden Bohrungen mit ausstrahlender Wirkung und nicht über größere Flächen, wodurch Schneidleistung und Lebensdauer nicht optimal sind.

Aufgabe der Erfindung ist es, ein Werkzeug oben genannter Gattung anzugeben, welches so optimal ist, daß Schneidleistung und Lebensdauer wesentlich erhöht sind. Dies soll insbesondere durch eine ausreichendgute Kühlung der Schneidplatte ereicht werden, ohne daß die Kompaktheit des Werkzeugs reduziert wird .(ausreichende Vibrationsdämpfung).

Diese Aufgabe wird erfindungsgemäß durch ein Werkzeug für spanabhebendes Bearbeiten mit den Merkmalen des Patentanspruchs 1 gelöst.

Demgemäß ist die Schneidplatte des Werkzeuges mit einem Innenhohlraum versehen, der Körper ist mit hitzebeständigem und/oder festem Material gefüllt in welchem Kühlmitteldurchgänge vorgesehen sind.

Der Schalenkörper des Werkzeuges und/oder des Tragkörpers der Schneidplatte kann mit Trennwänden und/oder Rippen versehen sein.

Die Schneidplatte ist mit wenigstens einem Zufuhrkanal und mit wenigstens einem Abfuhrkanal versehen, über welche der Innenraum der Schneidplatte zum Beispiel mit Zufuhrelementen im Tragkörper und mit einem Durchgang im Werkzeugkörper in Verbindung stehen. Diese Kanäle können in einer Unterlage oder im Boden der Platte vorgesehen sein. Die Unterlage der Schneidplatte kann mit Rippen versehen sein. Die Durchgänge im Werkzeugkörper, die Zufuhr und Abfuhr im Tragelement der Schneidplatte und die Zufuhr- und Abfuhrkanäle dienen bei der Hauptausführung zur Zirkulation des Kühlmediums und für dessen Zufuhr direkt zur aktiven Schneide der Schneidplatte von außen. Gleich oder ähnlich ausgeführte Durchgänge können jedoch auch für ein Führen der adaptiven Kontrolle des Bearbeitungsvorganges dienen und auch für ein Lagern eines Vorratsbehälters auswechselbarer Schneidplatten. In allen Fällen bildet das derart ausgeführte Werkzeug eine sehr kompakte Einheit - alle Elemente sind im Werkzeugkörper gelagert - mit dem Vorteil einer Beibehaltung der Abmessungen und des Werkzeug-Bedarfs des Werkzeugkörpers.

Ein Vorteil der erfindungsgemäßen Lösung ist, daß die Lebensdauer des Werkzeuges erhöht wird. Gleichzeitig kann auch dessen Schneidleistung erhöht werden, dank einem fast vollkommenen Kühlen der Schneidplatte. Ein wirksames Kühlen der Schneidplatte kann nur durch eine Kombination des klassischen äußeren Kühlens zusammen mit einem inneren Kühlen mittels eines gewählten Mediums mit erzwungener Zirkulation erzielt werden. Das Kühlmedium wird in den Innenraum der Schneidplatte direkt an die aktive Schneide zugeführt und über den Innenraum zurückgeführt. Der Innenraum der Schneidplatte und der entstandene anwendbare Innenraum des Werkzeugkörpers sind auch deshalb vorteilhaft, da es dadurch möglich ist, daß die adaptive Kontrolle des Bearbeitungsvorganges vom Inneren des Werkzeuges als Ganzes ausgeführt werden kann. Soweit dazu das Werkzeug ausgelegt ist, ist es vorteilhaft, im Innenraum des Werkzeugkörpers einen Vorratsbehälter auswechselbarer Ersatzschneidplatten anzuordnen. Nicht zuletzt ist es ein Vorteil dieser Lösung, die grundsätzliche Einsparung von Material hoher Güte für die Konstruktion des Werkzeuges und der auswechselbaren Schneidplatte. Soweit der durch einen Schalenkörper gebildete Innenraum des Werkzeuges mit festem Material gefüllt ist, kann dieses Material zum Beispiel Beton, Schüttmaterial, plastisches Material, Schaum und dergleichen sein.

Beispiele konkreter Ausführungen der erfindungsgemäßen Werkzeuge für spanabhebendes Bearbeiten und auswechselbarer Schneidplatten sind in beiliegenden Zeichnungen dargestellt. Es zeigt:

Fig. 1 einen Längsschnitt durch einen Werkzeugkörper für Drehen,
Fig. 2 einen Querschnitt des in Fig. 1 dargestellten Körpers,
Fig. 3 einen Längsschnitt eines Werkzeugkörpers mit einem Tragelement der Schneidplatte,
Fig. 4 einen Längsschnitt eines Werkzeugkörpers für Drehen mit einem Tragelement der Schneidplatte, wobei der Körper mit festem Material gefüllt ist,
Fig. 5 das in Fig. 4 dargestellte Werkzeug im Querschnitt,
Fig. 6 eine ähnliche Lösung des in Fig. 4 dargestellten Werkzeuges im Querschnitt,
Fig. 7 eine weitere Variante des in Fig. 4 dargestellten Werkzeuges im Querschnitt,
Fig. 8 eine teilweise Seitenansicht eines Fräserkörpers,
Fig. 9 einen Axialschnitt dieses Fräserkörpers,
Fig. 10 eine teilweise Seitenansicht eines mit Material gefüllten Fräserkörpers,
Fig. 11 einen Vertikalschnitt einer dreieckförmigen Schneidplatte mit Unterlage,
Fig. 12 einen waagerechten Schnitt der in Fig. 11 dargestellten Schneidplatte,
Fig. 13 einen Vertikalschnitt einer rhombischen Schneidplatte mit Boden,
Fig. 14 einen waagerechten Schnitt der in Fig. 13 dargestellten Schneidplatte,
Fig. 15 einen Vertikalschnitt einer quadratischen Schneidplatte mit Trennwänden, einer geformten Unterlage und einer Öffnung für eine Einspannschraube,
Fig. 16 einen Horizontalschnitt der in Fig. 15 dargestellten Schneidplatte,
Fig. 17 einen Vertikalschnitt einer kreisförmigen Schneidplatte, mit Unterlage und Öffnung für eine Einspannschraube,
Fig. 18 einen Horizontalschnitt der in Fig. 17 dargestellten Schneidplatte,
Fig. 19 einen teilweisen Vertikalschnitt eines Werkzeugkörpers für Drehen mit einem Tragelement der Schneidplatte, gefüllt mit Material mit angedeuteter Leitung des Kühlmediums zur Platte.

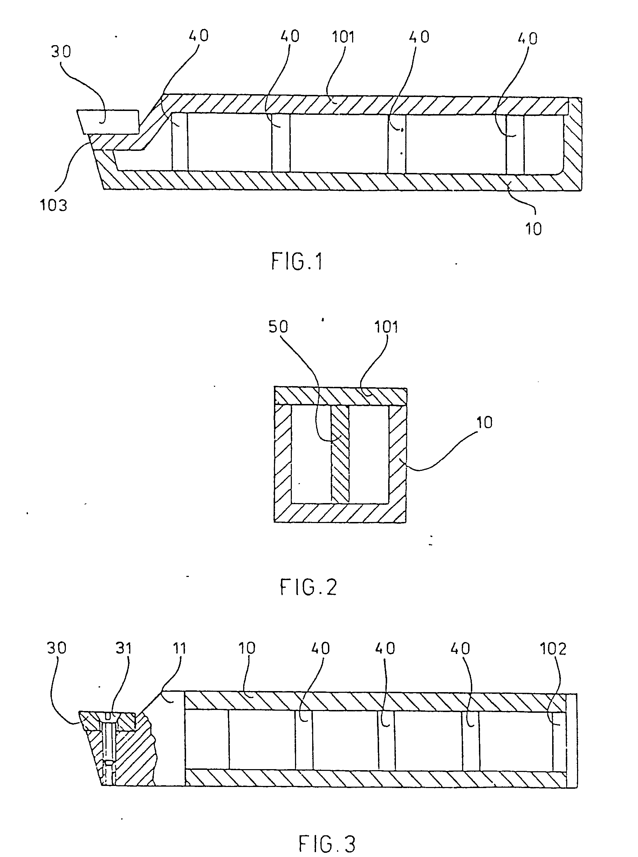

Fig. 1 zeigt einen Längsschnitt eines Werkzeugkörpers 10 für Drehen, der mit einem Deckel 101 versehen ist. Am Deckel 101 ist an dessen Schneidteil 103 zum Beispiel durch Löten eine Schneidplatte 30 befestigt. Im Innenraum des durch den Deckel 101 verschlossenen Körpers 10 sind Trennwände 40 vorgesehen.

Fig. 2 zeigt einen Querschnitt des in Fig. 1 dargestellten, mit einem Deckel 101 versehenen Körpers 10. Im Innenraum des Körpers 10 ist eine Rippe 50 vorgesehen.

Fig. 3 ist ein Längsschnitt eines Körpers 10 mit einem Tragelement 11 für die Schneidplatte 30. Am Tragelement 11 ist die auswechselbare Schneidplatte 30 durch eine Einspannschraube 31 befestigt. Im Innenraum des Körpers 10 sind Trennwände 40 vorgesehen und der Körper 10 ist durch einen Stöpsel 102 verschlossen.

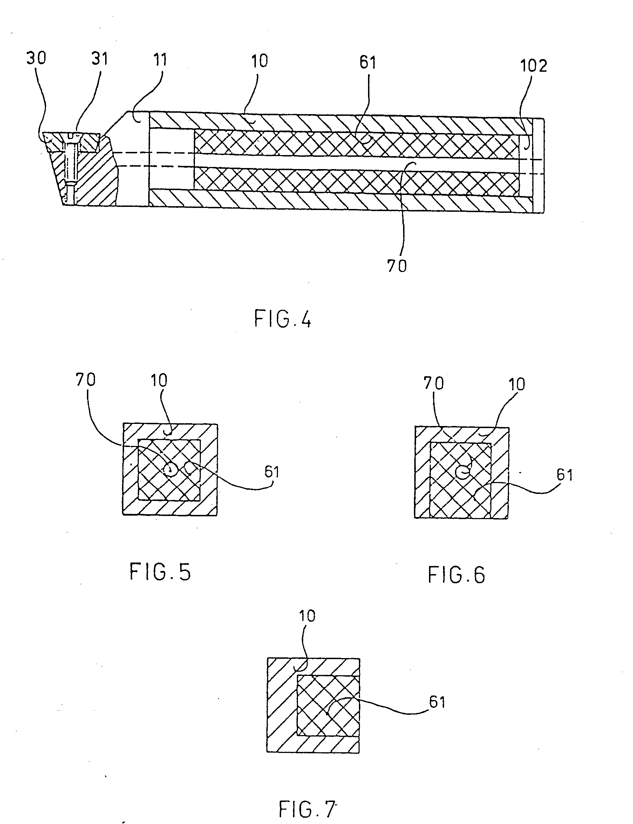

Fig. 4 zeigt eine Lösung eines Werkzeugkörpers 10 für Drehen mit einem Tragelement 11 und einem Stöpsel 102. Der Körper 10 ist mit einem Material 61 hoher Festigkeit gefüllt, in welchem ein Durchgang 70 ausgeführt ist. Der Durchgang 70 ist auch teilweise im Tragelement 11 dargestellt. Am Tragelement 11 ist mittels einer Einspannschraube 31 eine auswechselbare Schneidplatte 30 befestigt.

Fig. 5 zeigt den in Fig. 4 dargestellten Körper 10 im Querschnitt. Der Körper 10 ist mit einem Material 61 hoher Festigkeit gefüllt, in welchem ein Durchgang 70 ausgeführt ist.

Fig. 6 zeigt eine Variante eines Werkzeugkörpers 10 für Drehen im Querschnitt, der als nicht geschlossenes Schalentragwerk ausgeführt ist. Es ist mit einem Material 61 hoher Festigkeit gefüllt, in welchem ein Durchgang 70 vorgesehen ist.

Fig. 7 zeigt eine weitere Variante des in Fig. 6 dargestellten Werkzeugkörpers 10 für Drehen im Querschnitt, der als nicht geschlossener Schalenkörper ausgeführt ist. Er ist mit einem Material 61 hoher Festigkeit gefüllt.

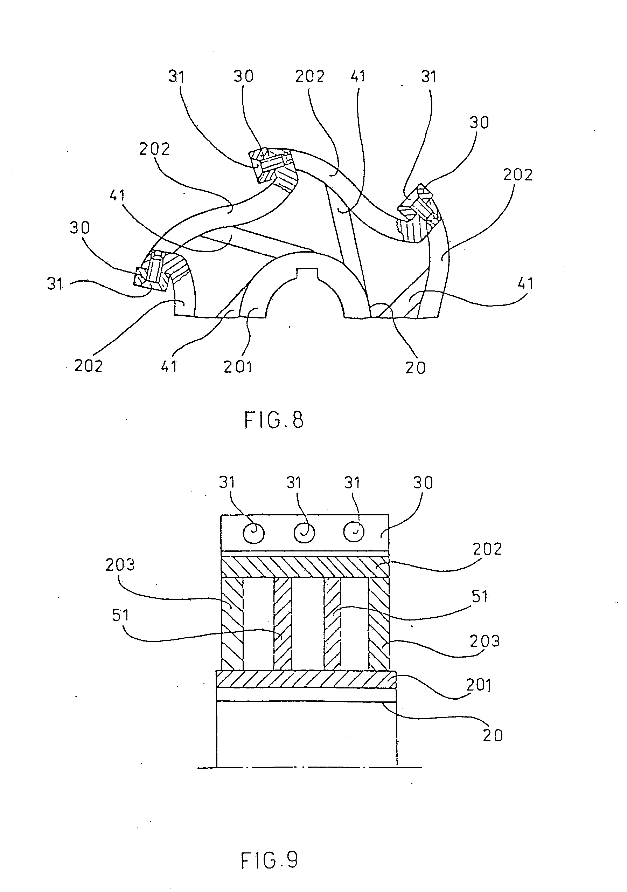

Fig. 8 zeigt in Seitenansicht einen Fräserkörper 20, bestehend aus einem mittleren Teil 201 und einem Tragteil 202. Am Tragteil 202 sind auswechselbare Schneidplatten 30 mittels Einspannschrauben 31 befestigt. Zwischen dem mittleren Teil 201 und dem Tragteil 202 sind Trennwände 41 ausgeführt.

Fig. 9 zeigt einen teilweisen Querschnitt eines Fräserkörpers 20, bestehend aus einem mittleren Teil 201, einem Tragteil 202 für Schneidplatten und aus Seitenwänden 203, welche diese Teile miteinander verbinden. Im Innenraum des Körpers 20 sind zwischen dem mittleren Teil 201 und dem Tragteil 202 Rippen 51 vorgesehen, deren Achsen mit der Werkzeugachse identisch sind. Auswechselbare Schneidplatten 30 sind am Tragteil 202 durch Schrauben 31 befestigt.

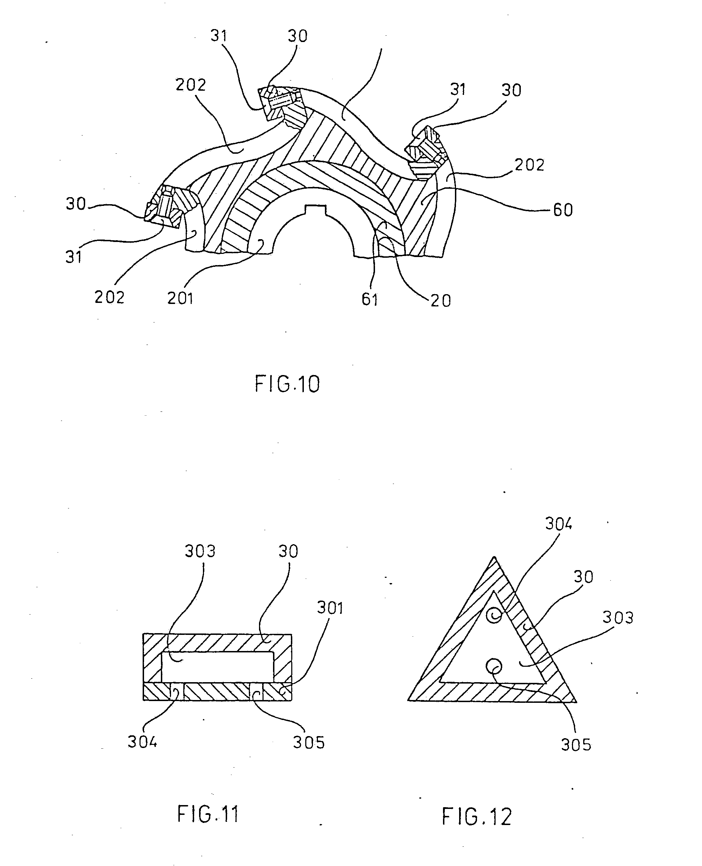

Fig. 10 zeigt in teilweiser Seitenansicht einen Fräserkörper 20, bestehend aus einem mittleren Teil 201, und einem Tragteil 202. Am Tragteil 202 sind mittels Einspannschrauben 31 auswechselbare Schneidplatten 30 befestigt. Zwichen dem mittleren Teil 201 und dem Tragteil 202 sind im Fräsenkörper 20 ein Material 60 und 61 eingebettet. Der innere Kreisring wird durch ein Material 61 hoher Festigkeit und erhöhter Dämpfungseigenschaften und der äußere Kreisring durch ein Material erhöhter Hitzebeständigkeit bei beibehaltener Festigkeit gebildet.

Fig. 11 ist ein Vertikalschnitt durch einen Körper 30 einer dreieckigen Schneidplatte, die mit einer Unterlage 301 versehen ist. Der Innenraum 303 des Körpers 30 ist mit dem Milieu der Umgebung über einen Zufuhrkanal 304 und einen Abfuhrkanal 305 verbunden.

Fig. 12 zeigt einen Horizontalschnitt durch einen Körper 30 der in Fig. 11 dargestellten Schneidplatte mit einem Innenraum 303 mit einem Zufuhrkanal 304 und einem Abfuhrkanal 305.

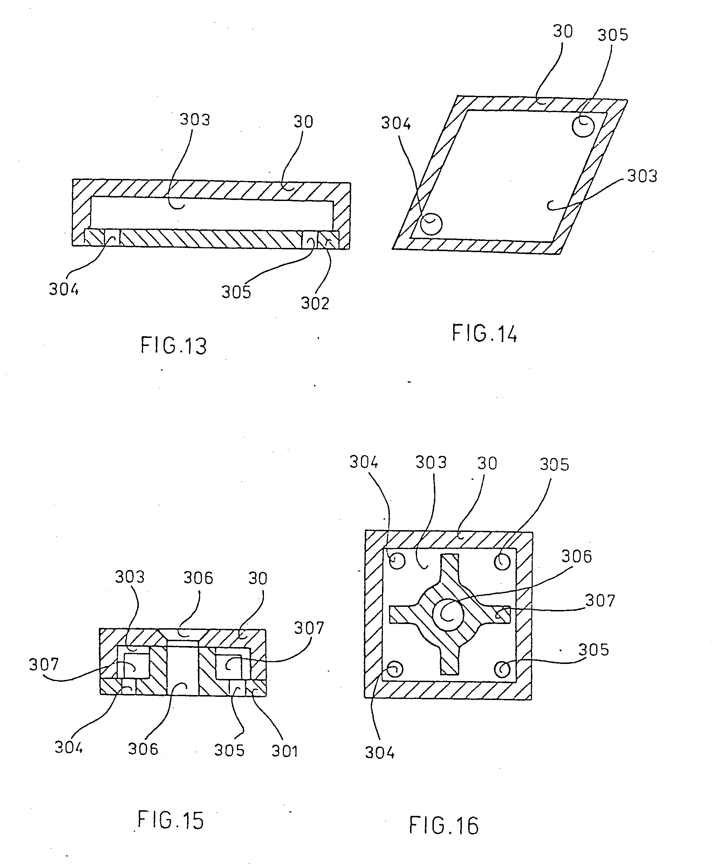

Fig. 13 ist ein Vertikalschnitt durch einen Körper 30 einer rhombischen Schneidplatte mit einem Boden 302, in welchem ein Zufuhrkanal 304 und ein Abfuhrkanal 305 ausgebildet sind, die den Innenraum 303 des Körpers 30 mit dem äußeren Milieu verbinden.

Fig. 14 zeigt einen Horizontalschnitt durch einen Körper 30 der in Fig. 13 dargestellten rhombischen Schneidplatte mit dem Innenraum 303, dem Zufuhrkanal 304 und dem Abfuhrkanal 305.

Fig. 15 ist ein Vertikalschnitt durch einen Körper 30 einer quadratischen Schneidplatte mit einer geformten Unterlage 301, deren Bestandteile Rippen 307 sind und in welcher eine Öffnung 306 für eine Einspannschraube 31 ausgeführt ist. Der Innenraum 303 des Körpers 30 ist mit dem äußeren Milieu über Zufuhrkanäle 304 und Abfuhrkanäle 305 verbunden.

Fig. 16 ist ein Horizontalschnitt durch einen Körper 30 der in Fig. 15 dargestellten quadratischen Schneidplatte, in deren Innenraum Rippen angeordnet sind. In deren Mitte ist eine Öffnung 306 für eine Einspannschraube 31 ausgeführt. In den Innenraum 303 münden zwei Zufuhrkanäle 304 und zwei Abfuhrkanäle 305.

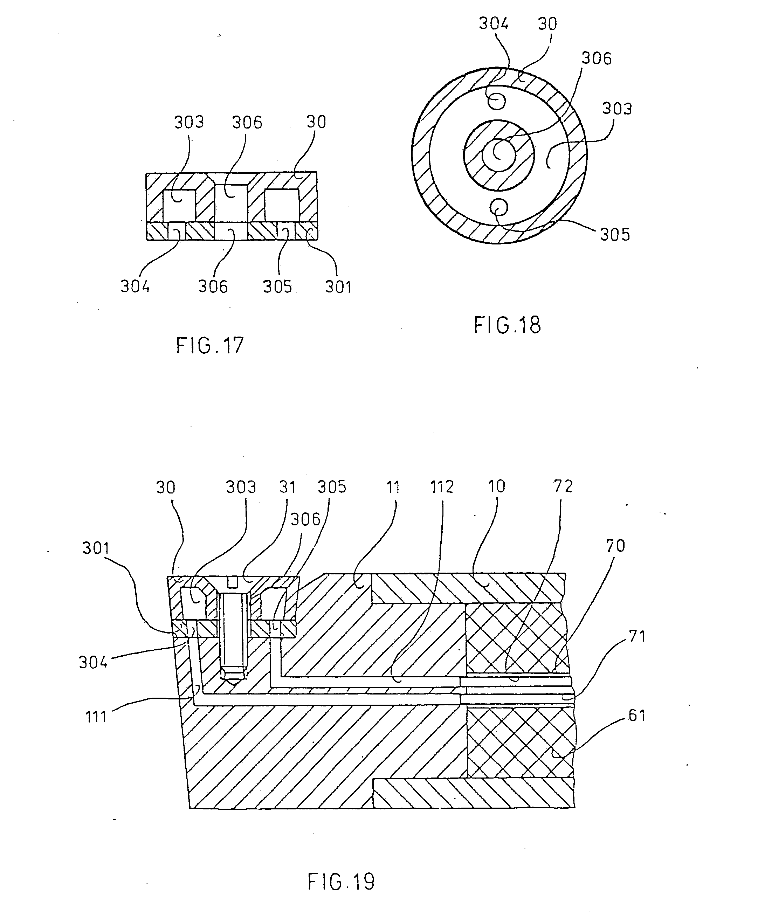

Fig. 17 zeigt einen Vertikalschnitt durch einen Körper 30 einer kreisförmigen Schneidplatte, in welchem eine Öffnung 306 für eine Einspannschraube 31 ausgeführt ist. In den Innenraum 303 münden ein Zufuhrkanal 304 und ein Abfuhrkanal 305.

Fig. 18 ist ein Horizontalschnitt durch den in Fig. 17 dargestellten Körper 30 der kreisförmigen Schneidplatte, in welchem eine Öffnung 306 für eine Einspannschraube 31 ausgeführt ist. In den Innenraum 303 münden wieder ein Zufuhrkanal 304 und ein Abfuhrkanal 305.

Fig. 19 zeigt in teilweisem Längsschnitt einen Werkzeugkörper 10 für Drehen, der in Fig. 4 dargestellt ist, im Detail. Der Werkzeugkörper 10 ist mit einem Material 61 hoher Festigkeit gefüllt und ist mit einem Tragelement 11 einer Schneidplatte 30 versehen. In diesem Tragelement 11 ist eine Zufuhr 111 für ein Kühlmedium und eine Abfuhr 112 des Kühlmediums ausgeführt. An die Zufuhr 111 des Kühlmediums im Tragelement 11 schließt ein in der Unterlage 301 der Scheidplatte 30 ausgebildeter Zufuhrkanal 304 an. Die Abfuhr 112 im Tragelement 11 schließt an einen Abfuhrkanal 305 an, der in der Unterlage der Schneidplatte 30 ausgeführt ist. Die Schneidplatte 30 besitzt eine Öffnung 306, an welche eine Öffnung in der Unterlage 301 für eine Einspannschraube 31 anliegt, mittels welcher sie an das Tragelement 11 angeschlossen ist. An dem Stutzen der Zufuhr 111 im Tragelement 11 ist ein Zufuhrrohr 71 befestigt, das im Durchgang 70 des Körpers 10 gelagert ist. Am Stutzen der Abfuhr 112 ist ein Abfuhrrohr 72 befestigt, das im Durchgang 70 des Körpers 10 gelagert ist.

Das grundsätzliche Wesen der Konstruktion der Werkzeugkörper 10, 20 ist deren schalenförmige Ausführung mit dem daraus folgenden Innenraum. Dies gilt ohne Rücksicht auf den Querschnitt des Körpers, der zum Beispiel bei Drehmeisseln quadratisch, kreisförmig, oder auch anders gestaltet werden kann.

Der Werkzeugkörper 10 für Drehen kann aus einem Stück gefertigt werden oder aus einzelnen Wänden, die zum Beispiel durch Schweißen, Kleben oder auf andere Art, je nach der Art des angewendeten Materials, miteinander verbunden sind, oder kann aus verschiedenen Profilarten L, T, U zusammengesetzt sein und allfällig mit einem Deckel oder einer Wand ergänzt werden.

Die Trennwände 40 oder die Rippen 50 werden dann in den Körper 10 eingelegt und werden entweder durch Schweißen, Kleben oder anders befestigt.

Ein Fräserkörper 20 kann folgendermaßen zusammengesetzt werden. Am mittleren Teil 201 wird eine, allfällig mehrere Rippen 51 befestigt. An die Rippen 51 wird der Tragteil 202 befestigt und schließlich werden Seitenwände 203 am mittleren Teil und am Tragteil 202 befestigt. Auf dieselbe Weise können anstatt von Rippen 51 Trennwände 41 angewendet werden.

Festes Material 60, 61 wird in die Werkzeugkörper 10, 20 eingespritzt, eingegossen, allfällig eingeschüttet und gleichzeitig gestampft, je nach Art des Materials, da manches Material in die Werkzeugkörper in flüssigem Zustand eingeführt wird. Dazu dienen verschließbare Öffnungen in den Körpern 10, 20, zum Beispiel der Pfropfen 102 beim Werkzeugkörper 10 für Drehen, oder die Seitenwand 203 beim Fräsenkörper 20 oder besondere, nicht angedeutete Öffnungen.

Die Zusammensetzung eines Drehmeißels, dessen Teil in Fig. 19 dargestellt ist, kann folgendermaßen ausgeführt werden.

Der Tragteil 11 wird auf übliche Weise erzeugt, inbegriffen den Absatz für die Befestigung im Werkzeugkörper 10 und die Lagerung für die Unterlage 301 und für die Schneidplatte 30 mit einer mit Gewinde versehenen Öffnung für die Einspannschraube 31. Die Zufuhr 111 und Abfuhr 112 des Kühlmediums wird gemäß üblicher Technologie ausgebohrt. Ferner werden an die Stutzen der Zufuhr 111 und der Abfuhr 112 durch Aufpressen oder Anlöten, Ankleben oder Anschweißen das Zufuhrrohr 71 und das Abfuhrrohr 72 unlösbar angeschlossen. Der Werkzeugkörper 10 eines rohrförmigen oder quadratischen Profils - je nach der Ausführung des Absatzes des Tragteiles 11 - wird auf den Absatz des Tragteiles 11 derart aufgeschoben, daß das Zufuhrrohr 71 und das Abfuhrrohr 72 durch den Durchgang 70 führen und der Tragteil 11 wird mit dem Körper 10 zum Beispiel durch Schweißen fest verbunden. Vorher wurde der Körper 10 mit dem Material 61 hoher Festigkeit gefüllt, in welchem mittels eines nicht dargestellten Rohres, das nach dem Füllen des Körpers 10 mit dem Material 61 entfernt wurde, der Durchgang 70 ausgeführt wurde. In einem anderen Fall kann dieses nicht dargestellte Rohr im Körper 10 belassen werden. Die Verbindung des Tragteiles 11 und des Körpers 10 kann auch auseinandernehmbar gemäß einem bekannten Verfahren ausgeführt werden. In diesen Fällen sind die Stutzen der Zufuhr 111 und der Abfuhr 112 mit den Rohren 71, 72 aneinander nur angepaßt und ihre feste Verbindung ist nicht nötig.

An die Zufuhr 111 des Kühlmediums ist ein Zufuhrkanal 304 in der Unterlage 301 angeschlossen, die einen Teil des Tragkörpers 11 oder auch der Schneidplatte 30 sein kann. In Fig. 19 ist sie ein Teil des Tragelementes 11. In der Unterlage 301 ist außer dem Zufuhrkanal 304 noch eine Öffnung 306 für die Einspannschraube 31 und ein Abfuhrkanal 305 ausgeführt. Die eigentliche, in diesem Fall kreisförmige Schneidplatte 30 ist durch die Einspannschraube 31 über deren Öffnung 306 und eine gleich bezeichnete Öffnung 306 in der Unterlage auseinandernehmbar an das Tragelement 11 angeschlossen. An den Abfuhrkanal in der Unterlage 301 ist die Abfuhr 112 im Tragelement 11 angeschlossen und ferner ein im Durchgang 70 durch das Material 61 im Körper 10 angeordnetes Rohr 72. Dieses Verfahren kann auch für das Zusammensetzen anderer Werkzeuge angewendet werden. Beim Erzeugen des eben beschriebenen Werkzeuges kann allerdings auch anders vorgegangen werden.

Die vorteilhafte Wirkungsweise des in Fig. 19 dargestellten Drehmeißels beruht vor allem in einem sehr wirksamen Kühlen der Schneidplatte 30 und so in einer Erhöhung der Schneidleistung oder der Lebensdauer der Schneidplatte 30. Ferner zeigt sich eine Einsparung von Qualitätsmaterial, das zum Erzeugen des ganzen Werkzeuges benötigt wird. Es zeigen sich noch weitere Vorteile, wie zum Beispiel ein Antivibrationseffekt des Materials 61 im Werkzeugkörper 10, 20.

Das Kühlmedium wird in das Werkzeug aus der Werkzeugmaschine oder aus einer äußeren Quelle mittels einer Pumpe zugeführt. Im Werkzeug wird es vorerst über das Zufuhrrohr 71 im Durchgang 70 geführt, dann über die Zufuhr 111 im Tragelement 11 und über den Zufuhrkanal 304 in der Unterlage 301 in den Innenraum 303 der Schneidplatte 30. Das Kühlmedium wird direkt der aktiven Schneide der Schneidplatte 30 oder dem Teil der Schneide zugeführt, der im Betrieb im Eingriff steht. Durch diese Anordnung wird ein hoher Kühleffekt erzielt, der, falls mit dem klassischen äußeren Kühlen kombiniert, eine maximal erzielbare Dauerhaftigkeit der Schneidplatte sichert, unter Beibehaltung der Schneidleistung oder aber ein Erhöhen der Schneidleistung bei gleicher Lebensdauer der Schneidplatte 30. Allfällige Undichtigkeiten der Schneidplatte 30 und der Unterlage 301, die ein Entweichen des Kühlmediums verursachen können, sind nicht ein Nachteil, denn sie beeinflussen nicht negativ den erzielten Effekt. Das Kühlmedium, das die Wärme aus dem aktiven Teil der Scheide übernommen hat, wird aus dem Innenraum 303 der Schneidplatte 30 durch das zugeführte frische Kühlmedium in den Abfuhrkanal 305 in der Unterlage 301 und ferner in die Abfuhr 112 im Tragelement 11 und in das Abfuhrrohr 72 im Durchgang 70 im Werkzeugkörper 10 zurück in den Behälter des Kühlsystems verdrängt.

Während des Bearbeitungsverfahrens kann sich die Schneidplatte drehen oder verdrehen, wie dies im Fall der Schneidplatte 30 in Fig. 19 ist und zwar entweder von Hand, oder in Verbindung mit einem selbsttätigen kreisförmigen Schneidplatte 30, soweit sie an einem Bolzen frei drehbar gelagert ist Die Erfindung kann sowohl für Werkzeuge beim Drehen, als auch beim Fräsen angewendet werden, das heißt an Drehmeißeln, Fräsern, Fräsköpfen aller Arten und Abmessungen. Durch seine Charakteristik kann das erfindungsgemäße Werkzeug eher für Bearbeitungsstellen ohne Bedienung, d.h. verkette für und taktgebundene Fertigungssysteme Anwendung finden.

Im Zusammenhang damit ist es möglich, den Innenraum der Körper 10, 20 auch für ein Unterbringen von Elementen der adaptiven Kontrolle des Bearbeitungsverfahrens gemäß verschiedener Prinzipien auszunützen. Die Anordnung der Körper 10, 20 bildet gleichzeitig grundsätzliche Voraussetzungen für ein Benützen des Innenraumes für ein Lagern von Vorratsbehältern von Schneidplatten und eines Mechanismus für deren selbsttätiges Auswechseln, falls ein derartiges System benützt wird. Dann ist es vorteilhafter, für ein Versteifen des Schalenkörpers 10, 20 Rippen 50 oder 51 zu benützen anstatt ein Füllen der Körper 10, 20 mit einem Material 60, 61, allfällig eine weniger vorteilhafte Anwendung von Trennwänden 40 und 41.

**Patentansprüche**

1. Werkzeug für spanabhebendes Bearbeiten, insbesondere für Drehen und Fräsen, bei dem der Körper (10, 20) des Werkzeuges und/oder ein Tragelement (11, 202) einer Schneidplatte (30) als Schalenkörper ausgeführt ist, dadurch gekennzeichnet, daß die Schneidplatte (30) mit einem Innenraum (303) versehen ist, daß der Werkzeugkörper (10, 20) mit einem Material (60) mit erhöhter Hitzebeständigkeit und/oder mit einem Material (61) mit hoher Festigkeit gefüllt ist, und daß im Werkzeugkörper (10, 20) und/oder im Tragelement (11, 202) der Schneidplatte (30) ein Durchgang (70) ausgeführt ist.

2. Werkzeug nach Anspruch 1 dadurch gekennzeichnet, daß die Schneidplatte (30) mittels wenigstens eines Zufuhrkanals (304) mit einer Zufuhr (111) und wenigstens mittels eines Abfuhrkanals (305) mit einer Abfuhr (112) eines Kühlmediums in Verbindung steht.

3. Werkzeug nach Anspruch 2, dadurch gekennzeichnet, daß der Zufuhrkanal (304) und der Abfuhrkanal (305) im Boden (302) der Schneidplatte (30) ausgeführt sind.

4. Werkzeug nach Anspruch 2, dadurch gekennzeichnet, daß der Zufuhrkanal (304) und der Abfuhrkanal (305) in der Unterlage der Schneidplatte (30) ausgeführt sind.

5. Werkzeug nach einem der Ansprüche 1 bis 4, dadurch gekennzeichnet, daß die Unterlage (301) der Schneidplatte (30) mit Rippen (307) versehen ist.

6. Werkzeug nach Anspruch 1 dadurch gekennzeichnet, daß der Schalenkörper des Werkzeugkörpers (10, 20) bzw. des Tragelements (11, 202) der Schneidplatte (30) mit Trennwänden (40, 41) und/oder Rippen (50, 51) versehen ist.

**Claims**

1. Tool for chip cutting, especially for turning and milling, in which the body (10, 20) of the tool and/or the supporting element (11, 202) of a cutting plate (30) is constructed as a shell body, characterised in that the cutting plate (30) is provided with an inner chamber (303), in that the tool body (10, 20) is filled with a material (60) having high beat resistance and/or is filled with a material (61) of high strength, and in that a passage (70) is constructed in the tool body (10, 20) and/or in the supporting element (11, 202) of the cutting plate (30).

2. Tool according to claim 1, characterised in that the cutting plate (30) is in contact with a cooling agent through at least one inlet channel (304) with a inlet (111) and through at least one outlet channel (305) with a outlet (112).

3. Tool according to claim 2, characterised in that the inlet channel (304) and the outlet channel (305) are constructed in the base (302) of the cutting plate (30).

4. Tool according to claim 2, characterised in that the inlet channel (304) and the outlet channel (305) are constructed in the support of the cutting plate (30).

5. Tool according to one of the claims 1 to 4, characterised in that the support (301) of the cutting plate (30) is provided with ribs (307).

6. Tool according to claim 1, characterised in that the shell body of the tool (10, 20) or the supporting element (11, 202) of the cutting plate (30) is provided with separating walls (40, 41) and/or ribs (50, 51).

**Revendications**

1. Outil d'usinage à enlèvement de copeaux, en particulier pour le tournage et le fraisage, dans lequel le corps (10, 20) de l'outil et/ou un élément support (11, 202) d'une plaque de coupe (30) est réalisé sous la forme d'un corps en coquille, caractérisé en ce que la plaque de coupe (30) est pourvue d'un espace intérieur (303), en ce que le corps d'outil (10, 20) est rempli d'une matière (60) à résistance accrue à la chaleur et/ou d'une matière (61) de résistance élevée, et en ce qu'un passage (70) est réalisé dans le corps d'outil (10, 20) et/ou dans dans l'élément porteur (11, 202) de la plaque de coupe (30).

2. Outil selon la revendication 1, caractérisé en ce que la plaque de coupe (30) est reliée au moyen d'au moins un canal d'alimentation (304) à une alimentation (111) et au moins au moyen d'un canal d'évacuation (305) à une évacuation (112) d'un milieu de refroidissement.

3. Outil selon la revendication 2, caractérisé en ce que le canal d'alimentation (304) et le canal d'évacuation (305) sort réalisés dans le fond (302) de la plaque de coupe (30).

4. Outil selon la revendication 2, caractérisé en ce que le canal d'alimentation (304) et le canal d'évacuation (305) sont réalisés dans la base de la plaque de coupe (30).

5. Outil selon l'une des revendications 1 à 4, caractérisé en ce que la base (301) de la plaque de coupe (30) est pourvue de nervures (307).

6. Outil selon la revendication 1, caractérisé en ce que le corps en coquille du corps d'outil (10, 20) ou de l'élément support (11, 202) de la plaque de coupe (30) est pourvu de parois de séparation (40, 41) et/ou de nervures (50, 51).

FIG.1

FIG.2

FIG.3

FIG.4

FIG.5

FIG.6

FIG.7

FIG. 8

FIG. 9

FIG.10

FIG.11

FIG.12

303    30

304

305

305

303

FIG.13    FIG.14

303    306    30

307    307

304    306    305    301

304    303    30    305

306

307

305

304

FIG.15    FIG.16

304   30
306
303
305

FIG.18

303   306   30
304   306   305   301

FIG.17

301
30   303   31   305   11   112   10   72
306   70
304
111   71
61

FIG.19